# EUROPÄISCHE PATENTANMELDUNG

(11) **EP 1 216 741 A2**
(43) Veröffentlichungstag der Anmeldung: **26.06.2002**
(21) Anmeldenummer: 01125617.9
(22) Anmeldetag: 26.10.2001
(51) Int. Cl.: B01D 29/33, B01D 29/52

(54) **Oberflächenentwässerungseinrichtung**

(30) Priorität: 21.12.2000 DE 10063856
(71) Anmelder: Isenmann Siebe GmbH, D-76131 Karlsruhe (DE)
(72) Erfinder: Lehmann, Wolfgang, 76456 Kuppenheim (DE)
(74) Vertreter: COHAUSZ DAWIDOWICZ HANNIG & PARTNER

(57) **Zusammenfassung**

Die Erfindung betrifft eine Leiste oder Säule für den Siebbelag eines Siebbodens, wobei die Leiste oder Säule über den Siebbelag nach oben vorsteht. Die Leiste oder Säule weist in mindestens einer Außenwand Öffnungen insbesondere Schlitze und/oder Spalte auf, die zu einem inneren Hohlraum insbesondere Kanal in der Leiste oder Säule führen, der mit dem Raum unterhalb des Siebbelages verbunden ist.

## Beschreibung

Die Erfindung betrifft eine Leiste oder Säule für den Siebbelag eines Siebbodens.

Die Oberflächenentwässerung zur Aufbereitung von Mineralien wie Kies, Sand, Kohle, Erze etc. erfolgt gewöhnlich mit Siebmaschinen, die in Förderrichtung einen ansteigenden (2 ― 5°) Siebboden haben. Die Zufuhr zur Siebmaschine ist ein Wasser-Feststoffgemisch, wobei das Wasser vom Feststoff zu trennen ist. Ziel ist es dabei, soviel Wasser wie möglich bei diesem Arbeitsgang vom Feststoff zu trennen, um eine möglichst geringe Restfeuchte im Feststoff nach diesem Prozess zu haben. Bekanntermaßen wird dies erreicht durch einen Spaltsiebboden, durch den das Wasser nach unten durchfließt. Bedingt durch die größere Dichte der Feststoffe, bildet sich über dem Siebboden ein Feststoffkuchen, der ein schnelles Durchfließen des Wassers verhindert.
Deshalb entsteht über dem Feststoffkuchen ein Wasserbett. Dieses sogenannte Oberflächenwasser wiederum gilt es schnell abzuleiten. Hierzu ist es bekannt, das Oberflächenwasser durch Entwässerungsrückwände und durch Entwässerungsseitenleisten zusätzlich abzuleiten. Auch sind Stauleisten auf der Oberseite von Siebbelägen bekannt. Sie dienen zur Anhäufung des Feststoffes und Zurückhaltung des Oberflächenwassers.

Aufgabe der Erfindung ist es, das Oberflächenwasser noch schneller abzuführen, um einen besseren Entwässerungseffekt am Feststoffprodukt, oder aber den gleichen Entwässerungseffekt mit einer kleineren Entwässerungssiebmaschine zu erreichen.

Diese Aufgabe wird erfindungsgemäß dadurch gelöst, dass die Leiste oder Säule über den Siebbelag nach oben vorsteht und in mindestens einer Außenwand Öffnungen insbesondere Schlitze und/oder Spalte aufweist, die zu einem inneren Hohlraum insbesondere Kanal in der Leiste oder Säule führen, der mit dem Raum unterhalb des Siebbelages verbunden ist.

Solche mit Entwässerungsöffnungen versehene Entwässerungsleisten und/oder Entwässerungssäulen werden parallel, quer oder schräg zum Materialförderstrom zusätzlich auf dem Entwässerungsbelag bzw. dem Siebbelagsystem angebracht und verbessern wesentlich die Entfeuchtungsleistung. Diese zusätzlichen Oberflächenentwässerungsleisten und/oder Oberflächenentwässerungssäulen können auf bestehende konventionelle Entwässerungsbeläge montiert (durch Schrauben, Schweißen, Anformen, Kleben, Rasten) oder in sogenannte Wechselsystem-Siebböden mit eingearbeitet werden. Je nach gewünschter Entwässerungsleistung können mehr oder weniger Leisten und/oder Säulen angeordnet werden.

Vorteilhafte Ausgestaltungen der Erfindung sind in den Unteransprüchen aufgeführt.

Im gesamten Text wird stets von "Entwässerung" gesprochen. Dieser Ausdruck ist aber so zu verstehen, dass statt Wasser auch andere Flüssigkeiten entfernbar sind.

Mehrere Ausführungsbeispiele der Erfindung sind in den Zeichnungen dargestellt und werden im folgenden näher beschrieben. Es zeigen
- Fig. 1: eine Entwässerungssiebmaschine mit ansteigendem Siebdeck in zwei senkrechten Schnitten und einer Draufsicht,
- Fig. 2: einen Querschnitt einer Oberflächenentwässerungsleiste für ein Siebwechselsystem,
- Fig. 3: eine Oberflächenentwässerungsleiste im Querschnitt für einen konventionellen Entwässerungssiebbelag,
- Fig. 4: eine mögliche Anordnung der Oberflächenentwässerungsleisten auf einem konventionellen Entwässerungssiebbelag,
- Fig. 5: eine Seitenansicht einer Oberflächenentwässerungsleiste für Systemsiebböden,
- Fig. 6: eine relativ kurze Oberflächenentwässerungsleiste,
- Fig. 7: eine Oberflächenentwässerungssäule mit fünf Entwässerungsflächen,
- Fig. 8.: eine Oberflächenentwässerungsleiste im Querschnitt in Verbindung mit einem Systemsiebboden,
- Fig. 9: mehrere Oberflächenentwässerungsleisten mit Unterbrechungen in Verbindung mit einem Siebboden und
- Fig. 10: eine Oberflächenentwässerungsleiste mit Durchbruch in Verbindung mit einem Siebboden.

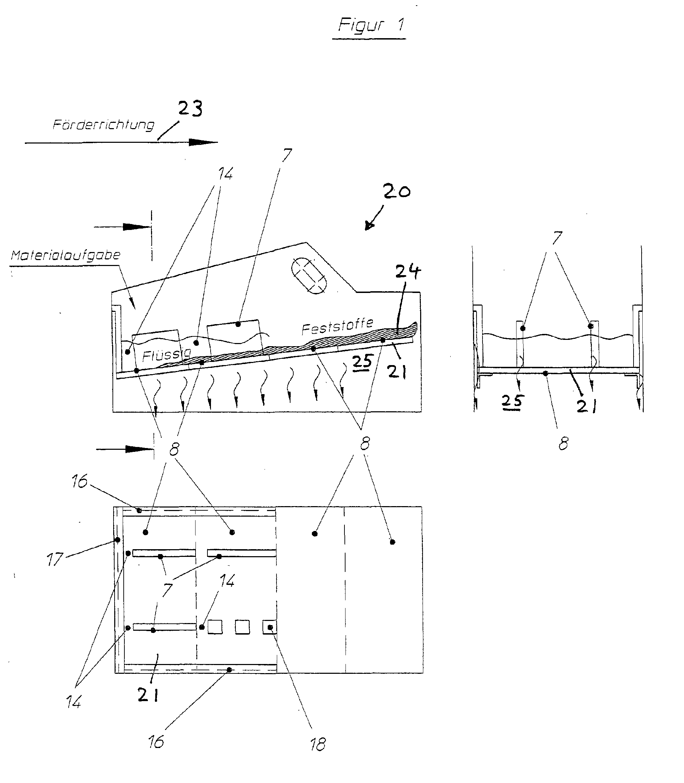

In Fig. 1 ist eine Siebmaschine 20 dargestellt mit einem Siebboden 21, dessen Entwässerungssiebbelag 8 aus einzelnen Siebelementen zusammen gesetzt ist. Der Siebbelag 8 bzw. die Siebelemente liegen hierbei über nicht dargestellte Kunststoffzwischenprofile auf Trägern 22 auf, in die die Zwischenprofile einrasten. Hierbei befinden sich an den Rändern des Siebbodens 21 entwässernde Seitenwände 16 und entwässernde Rückwände 17.

Bei den Entwässerungssiebbelägen kann es sich um Siebbeläge aus Metall als auch aus Kunststoff handeln. Sie können als konventionelle Siebe (sogenannte Planfelder oder Rahmenfelder) oder als Systemsiebfelder ausgeführt sein. Bekannt ist, dass zur Oberflächenentwässerung Entwässerungsrückstände 17 und/oder Entwässerungsseitenwände 16 eingesetzt werden.

Auf oder zwischen den Siebelementen des Siebbelages 8 sind Entwässerungsleisten 7 befestigt oder auf oder an den Siebelementen angeformt, die sich senkrecht über den Siebbelag erheben und vorzugsweise in Förderrichtung 23 angeordnet sind. Zum Leiten des Flüssigkeits-Feststoffgemisches können diese Leisten aber auch schräg zur Förderrichtung und zum Stau des Flüssigkeits-Feststoffgemisches auch quer dazu stehen.

Statt der Leisten 7 oder zusätzlich zu diesen können auch Entwässerungssäulen 18 angeordnet werden, die auf oder zwischen den Siebelementen befestigt oder angeformt sind. Die Seitenwände der Leisten 7 und Säulen 18 weisen Öffnungen, Schlitze und/oder Spalte 2 auf, durch die die wegzubringende Flüssigkeit in das Innere der Leiste bzw. der Säule fließt. Hierzu besitzt die Leiste/Säule einen inneren Hohlraum 3 und/oder einen Kanal 4 auf, der die durch die Öffnungen eindringende Flüssigkeit aufnimmt und nach unten führt. Der Hohlraum bzw. Kanal 3 endet erst unterhalb des Siebbodens 21, so dass die Flüssigkeit in den Raum 25 unterhalb des Siebbodens gelangt.

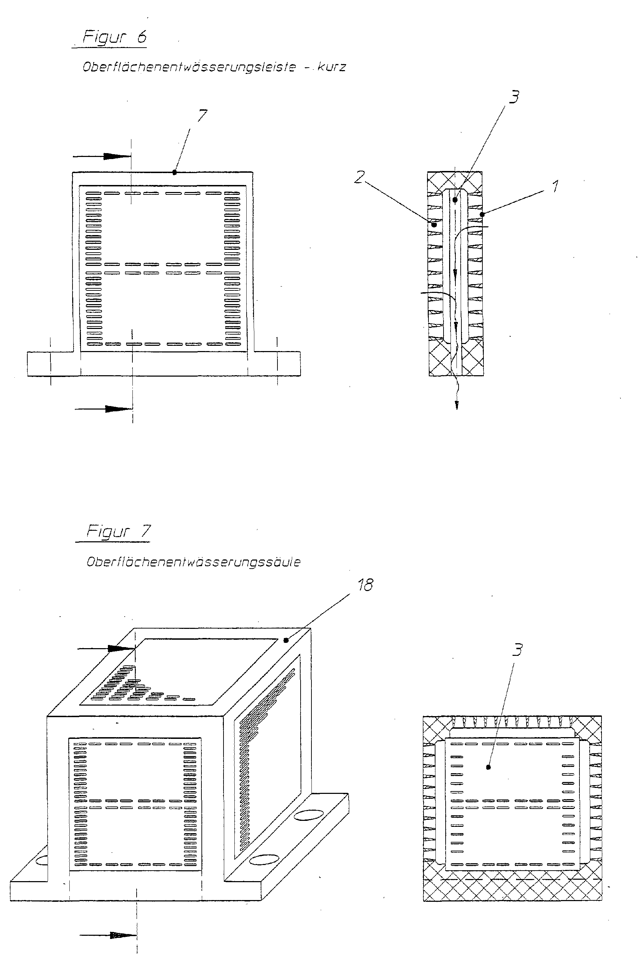

Das oberste Ende bzw. der Kopf der Leiste 7/der Säule 18 kann auch Öffnungen/Spalte/Schlitze 2 aufweisen, die auch zum Hohlraum 3-führen, so dass die Oberseite der Leiste bzw. Säule auch zur Entwässerung beiträgt. Eine solche mit Öffnungen/Spalten/Schlitzen versehene Oberseite ist in Fig. 7 bei der Säule 18 dargestellt. Die Säulen können dreieckig, rund oder viereckig sein.

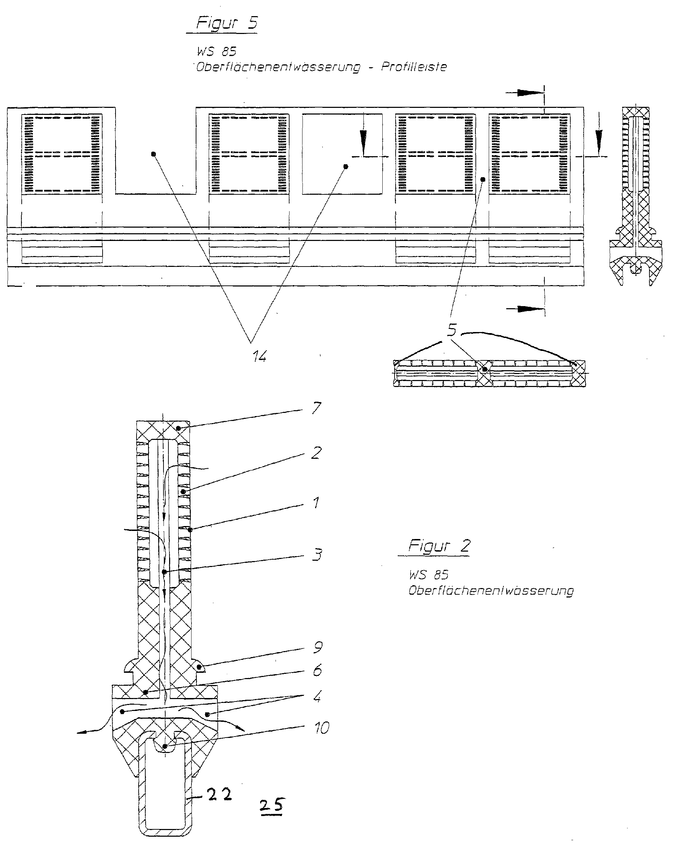

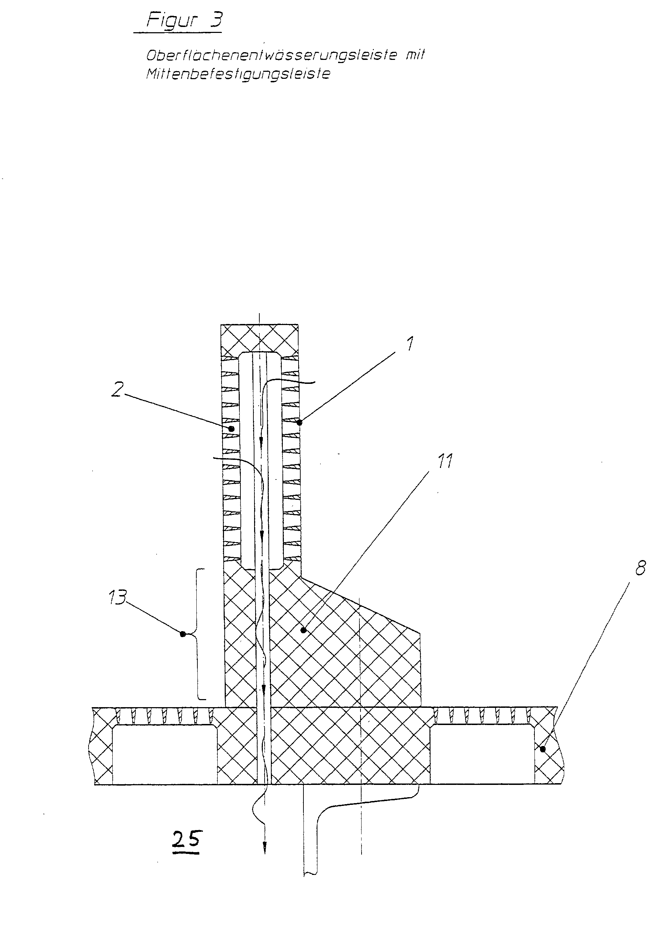

Bei dem in Fig. 2 gezeigten Ausführungsbeispiel liegt die Leiste 7 zwischen zwei nicht dargestellten Siebelementen und ist mit ihrer Unterseite am Träger 22 eingerastet, so dass an dieser Stelle die obengenannten Kunststoffzwischenprofile fehlen können. Die Leiste weist in Höhe der Siebelemente zu beiden Seiten leistenförmige Vorsprünge 9 auf, die in Längsausnehmungen der Stirnseiten der Siebelemente formschlüssig einliegen. Unterhalb der Siebelemente bildet die Leiste einen Querkanal 4, in den der Kanal 3 mündet, so dass zu beiden Seiten aus dem Kanal 4 die Flüssigkeit in den Raum 25 unter den Siebboden fließt.

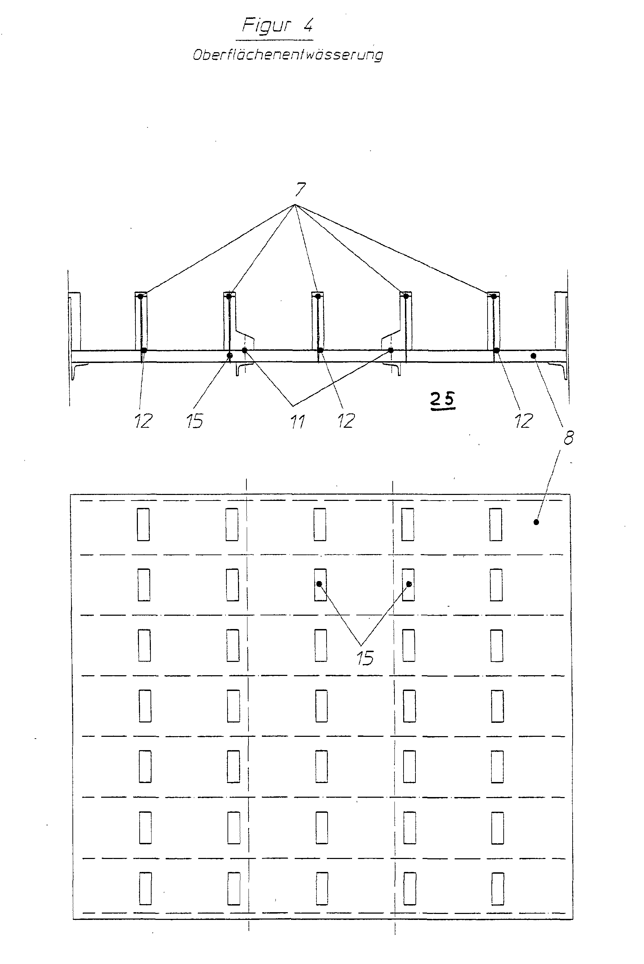

In Fig. 3 ist dargestellt, dass die Leiste auf der Oberseite des Siebbodens oder der Siebelemente angeschweißt, aufgeklebt oder angeschraubt sein kann. Hierzu weist die Leiste 7 einen verbreiterten Fuß 11 auf. Damit die Flüssigkeit aus der Leiste 7 nach unten gelangen kann, weist der Siebboden bzw. weisen die Siebelemente senkrechte Bohrungen auf, die mit dem Kanal 3 fluchten und unter den Siebboden führen.

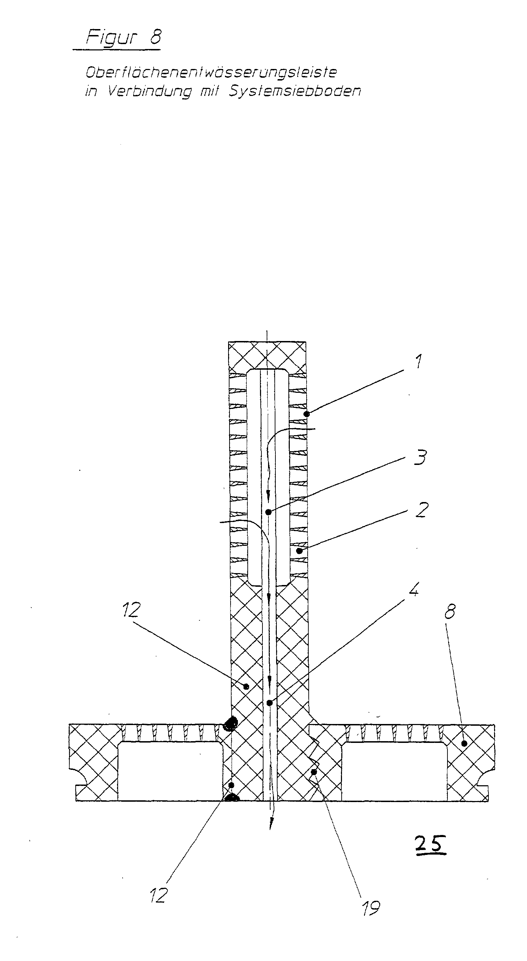

Das Ausführungsbeispiel nach Fig. 8 zeigt die möglichen Verbindungen der Leiste mit dem Siebbelag, geklebt, angegossen, verschweißt 12 oder als rastende Verbindung 19. Die Plazierung bzw. Anordnung der Entwässerungsleisten, -säulen kann unterschiedlich sein und richtet sich nach den Bedürfnissen.

Bei den Ausführungsbeispielen nach Fig. 6 und Fig. 7 ist im unteren Bere ich ein Flansch zum Verschrauben mit dem Siebbelag angedeutet.

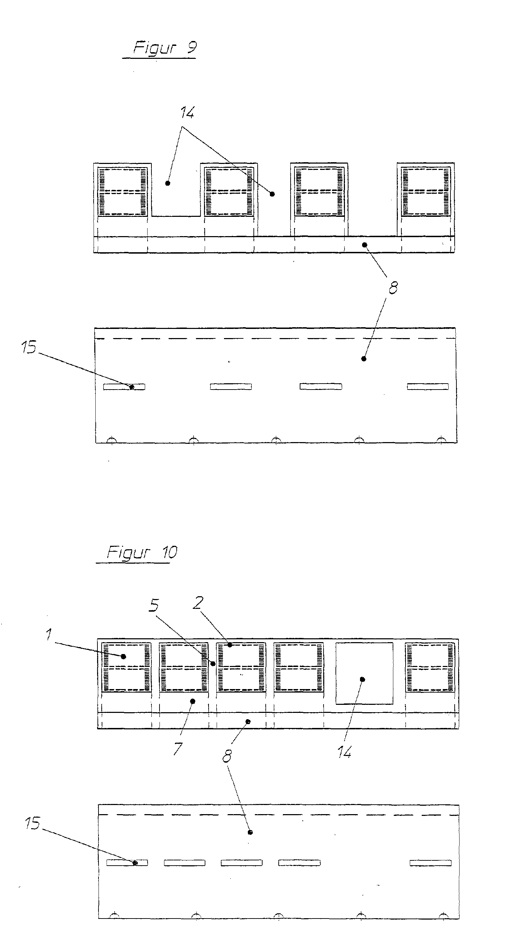

Die Entwässerungsleisten 7 können Unterbrechungen insbesondere in Form von Durchbrüchen 14 aufweisen, wie in den Fig. 5, 9 und 10 dargestellt, so dass in diesen Bereichen das zu siebende Gut hindurchfließen kann.

In allen Ausführungsbeispielen wird die Entwässerungsleistung wesentlich verbessert.

### Bezugszeichenliste:

- 1.: Außenwand
- 2.: Öffnungen, Spalte, Schlitze
- 3.: Hohlraum
- 4.: Kanalsystem
- 5.: Abstützung
- 6.: Elastomer Werkstoff
- 7.: Oberflächenentwässerungsleisten
- 8.: Entwässerungssiebbelag
- 9.: seitlicher Vorsprung für Wechselsiebsystem (-Profilierung)
- 10.: Rastende Verbindung
- 11.: Fuß
- 12.: Schweiß-Klebverbindung-Gießverbindung
- 13.: Blindfläche über dem Siebbelag
- 14.: Durchbrüche/Unterbrechungen an der Entwässerungsleiste
- 15.: Durchbrüche im Siebbelag
- 16.: Seitenwandentwässerung
- 17.: Rückwandentwässerung
- 18.: Entwässerungssäule
- 18a.: Vorsprünge/Flansche
- 19.: Rastende Verbindung
- 20.: Siebmaschine
- 21.: Siebboden
- 22.: Träger
- 23.: Förderrichtung
- 24.: Gemisch
- 25.: Raum unterhalb des Siebbelages

## Patentansprüche

1. Leiste (7) oder Säule (18) für den Siebbelag (8) eines Siebbodens, **dadurch gekennzeichnet, dass** die Leiste (7) oder Säule (18) über den Siebbelag nach oben vorsteht und in mindestens einer Außenwand (1) Öffnungen (2) insbesondere Schlitze und/oder Spalte aufweist, die zu einem inneren Hohlraum (3) insbesondere Kanal in der Leiste (7) oder Säule (18) führen, der mit dem Raum (25) unterhalb des Siebbelages (8) verbunden ist.

2. Leiste (7) oder Säule (18) nach Anspruch 1, **dadurch gekennzeichnet, dass** der innere Hohlraum (3) mindestens ein Überbrückungsteil (5) aufweist, das zwei gegenüberliegende Innenwände stützend verbindet.

3. Leiste (7) oder Säule (18) nach Anspruch 1 oder 2, **dadurch gekennzeichnet, dass** sie auf und/oder zwischen den Siebelementen des Siebbelages (8) befestigbar ist.

4. Leiste (7) oder Säule (18) nach Anspruch 3, **dadurch gekennzeichnet, dass** sie seitlich Vorsprünge (9) und Rücksprünge (9a) aufweist, mit denen sie formschlüssig insbesondere rastend in Ausnehmungen in den Stirnseiten der Siebelemente einliegt.

5. Leiste (7) oder Säule (18) nach Anspruch 3 oder 4, **dadurch gekennzeichnet, dass** sie am Siebbelag (8) angeschraubt, angeklebt, angegossen, angeformt und/oder angeschweißt ist.

6. Leiste (7) oder Säule (18) nach einem der vorherigen Ansprüche, **dadurch gekennzeichnet, dass** sie an der unter dem Siebbelag (8) befindlichen Tragkonstruktion (22) formschlüssig und/oder rastend befestigbar ist.

7. Leiste (7) oder Säule (18) nach einem der vorherigen Ansprüche, **dadurch gekennzeichnet, dass** der innere Hohlraum (3) in einem Querkanal (4) mündet, der unterhalb des Siebbelags (8) liegt und dort sich ein- oder beidseitig nach außen öffnet.

8. Leiste nach einem der vorherigen Ansprüche, **dadurch gekennzeichnet, dass** sie sich längs oder quer zur Förderrichtung (23) erstreckt.

9. Leiste nach einem der vorherigen Ansprüche, **dadurch gekennzeichnet, dass** sie oberhalb der Siebfläche Durchbrüche und/oder Unterbrechungen (14) aufweist, durch die das Siebgut hindurchtreten kann.

10. Leiste (7) oder Säule (18) nach einem der vorherigen Ansprüche, **dadurch gekennzeichnet, dass** der Siebbelag (8) insbesondere die Siebelemente des Siebbelages Durchbrüche (15) aufweisen, die von der Siebbelagsoberseite bis zur Siebbelagsunterseite reichen und in die die Leiste (7) oder Säule (18) formschlüssig einsetzbar sind.

11. Leiste (7) oder Säule (18) nach einem der vorherigen Ansprüche, **dadurch gekennzeichnet, dass** sie im unteren Bereich (13) nahe der Sieboberfläche frei von Öffnungen, Schlitzen oder Spalten (2) ist.
